# FASCICULE DE BREVET EUROPEEN

(11) **EP 2 265 829 B1**
(45) Date de publication et mention de la délivrance du brevet: **06.11.2013**
(21) Numéro de dépôt: 09742280.2
(22) Date de dépôt: 08.04.2009
(51) Int. Cl.: F16B 7/04, F16B 7/00, F16S 3/08

(54) **STRUCTURE COMPORTANT AU MOINS UNE TRAVERSE TUBULAIRE HORIZONTALE FIXÉE À UN MONTANT VERTICAL**
STRUKTUR MIT MINDESTENS EINER AN EINEM VERTIKALEN PFOSTEN BEFESTIGTEN HORIZONTALEN ROHRFÖRMIGEN QUERSTREBE
STRUCTURE HAVING AT LEAST ONE HORIZONTAL TUBULAR CROSS MEMBER FIXED TO A VERTICAL UPRIGHT

(30) Priorité: 14.04.2008 FR 0802048
(43) Date de publication de la demande: 29.12.2010
(73) Titulaire: Fromain, Stéphane, 69440 Mornant (FR); Fromain, Patrick, 69110 Sainte-Foy-Les-Lyon (FR)
(72) Inventeur: Fromain, Stéphane, 69440 Mornant (FR); Fromain, Patrick, 69110 Sainte-Foy-Les-Lyon (FR)
(74) Mandataire: Maureau, Philippe
(86) Numéro de dépôt international: PCT/FR2009/050627
(87) Numéro de publication internationale: WO 2009/136082

(56) Documents cités:
- DE-A1- 19 854 895
- DE-C1- 19 806 922

## Description

L'invention concerne une structure du type comportant au moins une traverse tubulaire horizontale fixée à un montant vertical.

Une structure de ce type est notamment utilisée dans le domaine de l'ameublement ou pour la réalisation de stands d'exposition.

Ce type de structure doit en particulier être robuste et doit pouvoir être monté et démonté rapidement.

En outre, ce type de structure doit comporter des éléments standardisés permettant d'offrir une grande modularité, de manière à permettre par exemple la réalisation de stands de configurations différentes, par simple assemblage.

Pour cela, il est connu d'utiliser une structure telle que décrite dans le document FR 2 634 525.

Cette structure comporte au moins une traverse tubulaire horizontale fixée à un montant vertical présentant au moins une rainure longitudinale, ladite rainure présentant une zone interne de forme déterminée, par exemple en queue d'aronde ou en T, débouchant au niveau de la paroi périphérique du montant par une ouverture de largueur plus faible que ladite zone interne, la structure comportant en outre au moins un élément de fixation présentant une première partie, insérée dans la traverse, et une seconde partie, insérée dans la rainure, les première et seconde parties étant reliées l'une à l'autre par une zone de liaison de plus faible largeur, s'étendant à travers l'ouverture de plus faible largeur de la rainure.

L'élément de fixation est réalisé sous la forme d'une pince en aluminium et est fixé à la traverse par l'intermédiaire d'une vis permettant d'écarter la pince et ainsi réaliser son serrage sur le montant.

Un tel système de fixation, outre sa complexité, présente également l'inconvénient de déformer localement le montant à l'endroit où la pince est serrée et de dégrader la pince elle-même. Il est alors nécessaire de remplacer les montants au terme d'un nombre restreint de montages. En outre, les temps de montage et de démontage de la structure sont importants.

Le document DE 198 06 922 concerne une structure réalisée à partir de montants et de traverses tubulaires. Chaque montant présente au moins une rainure longitudinale dont l'entrée est rétrécie. Chaque traverse comporte à au moins une de ses extrémités une pièce d'assemblage présentant une forme oblongue permettant, dans une première position angulaire, d'engager l'extrémité de la pièce d'assemblage dans la rainure, puis, après rotation de 90°, de verrouiller la pièce d'assemblage dans la rainure.

Le document DE 198 54 895 concerne un garde corps comportant des montants et des traverses tubulaires. Chaque montant comporte au moins une rainure verticale dont la largeur de l'ouverture est réduite par rapport à la largeur du fond de la rainure, et chaque traverse comporte un embout en forme de T destiné à être engagé dans une rainure d'un montant vertical, l'immobilisation étant réalisée par des vis de pression.

L'invention vise à remédier à ces inconvénients en proposant une structure pouvant être montée et démontée rapidement, sans dégradation particulière des éléments qui la constitue.

A cet effet, l'invention concerne une structure comportant au moins une traverse tubulaire horizontale fixée à un montant vertical présentant au moins une rainure longitudinale, ladite rainure présentant une zone interne de forme déterminée, par exemple en queue d'aronde ou en T, débouchant au niveau de la paroi périphérique du montant par une ouverture de largueur plus faible que ladite zone interne, la structure comportant en outre au moins un élément de fixation présentant une première partie, insérée dans la traverse, et une seconde partie, insérée dans la rainure, les première et seconde parties étant reliées l'une à l'autre par une zone de liaison de plus faible largeur, s'étendant à travers l'ouverture de plus faible largeur de la rainure, caractérisée en ce que la première partie comporte des nervures périphériques s'étendant transversalement à l'axe de la traverse, agencées pour maintenir en position l'élément de fixation dans la traverse, la seconde partie présentant une section sensiblement complémentaire à celle de la zone interne ainsi qu'une forme générale conique dans le sens de son insertion dans la rainure, de manière à assurer son maintien par emmanchement et serrage dans ladite rainure.

Une structure de ce type comporte ainsi un élément de fixation pouvant être monté facilement et à force dans la traverse, par enfoncement de la première partie dans l'espace interne délimité par la traverse tubulaire, de sorte que les nervures maintiennent en position l'élément de fixation.

En outre, l'élément de fixation peut également être monté et démonté simplement dans la rainure du montant, par l'intermédiaire de la première partie de forme complémentaire à celle de la zone interne de ladite rainure. Il n'est alors plus nécessaire d'utiliser un système de pinces, comme cela est le cas dans l'art antérieur.

Selon une caractéristique de l'invention, l'élément de fixation est réalisé en matériau synthétique.

De cette manière, la dégradation des montants et des traverses est évitée.

Avantageusement, la seconde partie s'étend au-delà de la première partie, selon l'axe du montant et selon une première direction.

La longueur importante de la seconde partie permet d'assurer un meilleur positionnement de l'élément de fixation dans la rainure du montant, et facilite ainsi le montage de la structure.

Préférentiellement, la seconde partie s'étend, au-delà de la première partie, selon l'axe du montant et selon une seconde direction, de manière à former une butée additionnelle, destinée à prendre appui contre l'extrémité correspondante de la traverse.

La butée additionnelle facilite ainsi le montage et le positionnement de l'élément de liaison dans la traverse.

Selon une possibilité de l'invention, la première partie présente au moins une face biseautée lui procurant une forme générale conique.

La présence de la face biseauté permet de disposer d'un jeu de fonctionnement apte à compenser les défauts de positionnement. Il est ainsi possible de régler convenablement l'angle droit entre la traverse et le montant. En outre, cette caractéristique permet de faciliter l'insertion de la première partie dans la traverse.

Préférentiellement, l'une des extrémités de la seconde partie comporte une butée venant en appui contre une extrémité du montant.

La butée participe ainsi au maintien en positon de l'élément de fixation, et donc également de la traverse, vis-à-vis du montant.

Selon une caractéristique de l'invention, la butée est équipée d'au moins une nervure de renforcement.

Avantageusement, la première partie comporte au moins un trou, par exemple un trou borgne, orienté selon l'axe du montant.

Cette caractéristique permet notamment d'économiser de la matière lors d'un éventuel moulage de l'élément de fixation, allège cet élément et favorise la déformation de la première partie lors de son insertion à force dans la traverse.

Préférentiellement, la première partie présente une forme générale parallélépipédique.

Selon une possibilité de l'invention, la structure comporte une traverse additionnelle en forme générale de bandeau, reliée au montant par l'intermédiaire d'un élément de fixation additionnel comportant une première partie, insérée et fixée dans une rainure longitudinale de la traverse additionnelle par l'intermédiaire d'au moins une vis, et une seconde partie, insérée dans la rainure du montant et présentant une section complémentaire à celle de ladite zone interne, les première et seconde parties étant reliées l'une à l'autre par une zone de liaison de plus faible largeur, s'étendant à travers l'ouverture de plus faible largeur de la rainure du montant.

Il est ainsi également possible de fixer des bandeaux présentant des structures non tubulaires sur le montant.

De toute façon l'invention sera bien comprise à l'aide de la description qui suit en référence au dessin schématique annexé représentant, à titre d'exemples non limitatifs, plusieurs formes de réalisation de cette structure.
Figure 1 en est une vue en perspective, de dessus ;
Figure 2 est une vue en perspective, de dessus et en coupe partielle longitudinale, de la partie haute de cette structure ;
Figure 3 est une vue en perspective, de dessous et en coupe partielle longitudinale, de la partie basse de cette structure ;
Figure 4 est une vue en perpspective, de dessus, d'un élément de fixation d'une traverse supérieure ;
Figures 5 et 6 sont respectivement des vues de face et de dessous de l'élément de fixation de la figure 4 ;
Figures 7 à 9 sont des vues correspondant respectivement aux figures 4 à 6, d'une autre forme de réalisation de l'élément de fixation de la traverse supérieure ;
Figure 10 est une vue en perspective, de dessous, d'un élément de fixation d'une traverse inférieure ;
Figure 11 est une vue de dessous, de l'élément de fixation de la figure 7 ;
Figure 12 est une vue en perspective, de dessus, d'un élément de fixation d'une traverse addionnelle ;
Figures 13 et 14 sont respectivement des vues de dessous et de face de l'élément de fixation de la figure 12.

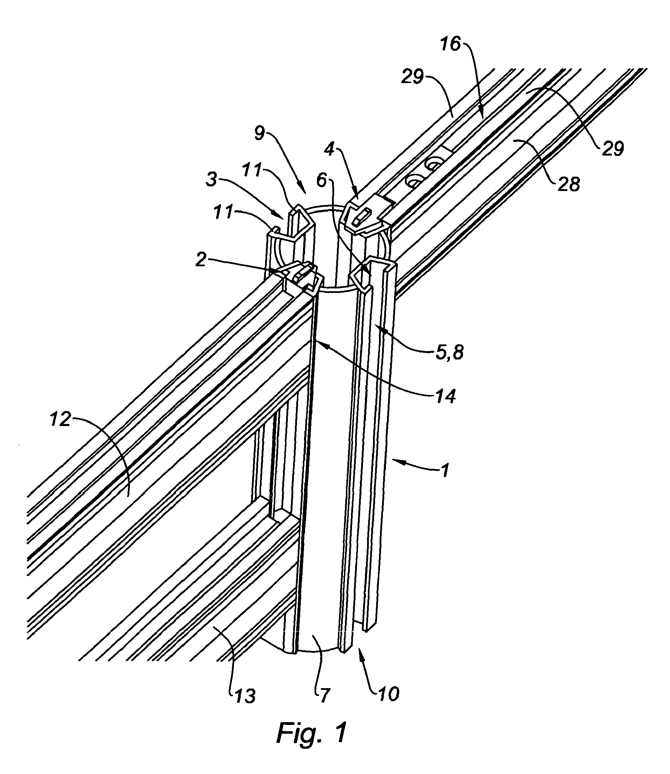

Une structure selon l'invention est représentée à la figure 1. Celle-ci comporte un montant 1 ou poteau vertical, profilé et de forme générale tubulaire. Le montant présente une forme générale cylindrique et comporte quatres rainures longitudinales 2, 3, 4, 5 , identiques, régulièrement réparties à sa périphérie.

Chaque rainure comporte une zone interne trapézoïdale 6 ou en forme de queue d'aronde, débouchant au niveau de la paroi périphérique 7 du montant 1 par une ouverture 8 de largueur plus faible que ladite zone interne 6. Chaque rainure 2 à 5 débouche en outre au niveau de chacune des extrémités 9, 10 du montant 1.

L'ouverture de plus faible largueur 8 est ainsi délimitée de part et d'autre par des ailes longitudinales 11 disposées en avant de la paroi périphérique 7 du montant 1.

La structure comporte en outre une pluralité de traverses 12, 13 disposées horizontalement.

Dans la forme de réalisation représentée à la figure 1, la structure comporte une traverse supérieure 12 et une traverse inférieure 13, une extrémité de chacune de ses traverses venant en appui contre les ailes longitudinale 11 de la rainure 2.

Selon les besoins, des traverses peuvent être disposées au niveau de chacune des rainures 2, 3, 4, 5 du montant 1.

Les ailes 11 et les traverses 12, 13 sont dimensionnées de manière à ce que les bords latéraux 14 des extrémités des traverses 12, 13 coïncident sensiblement avec ceux des ailes 11.

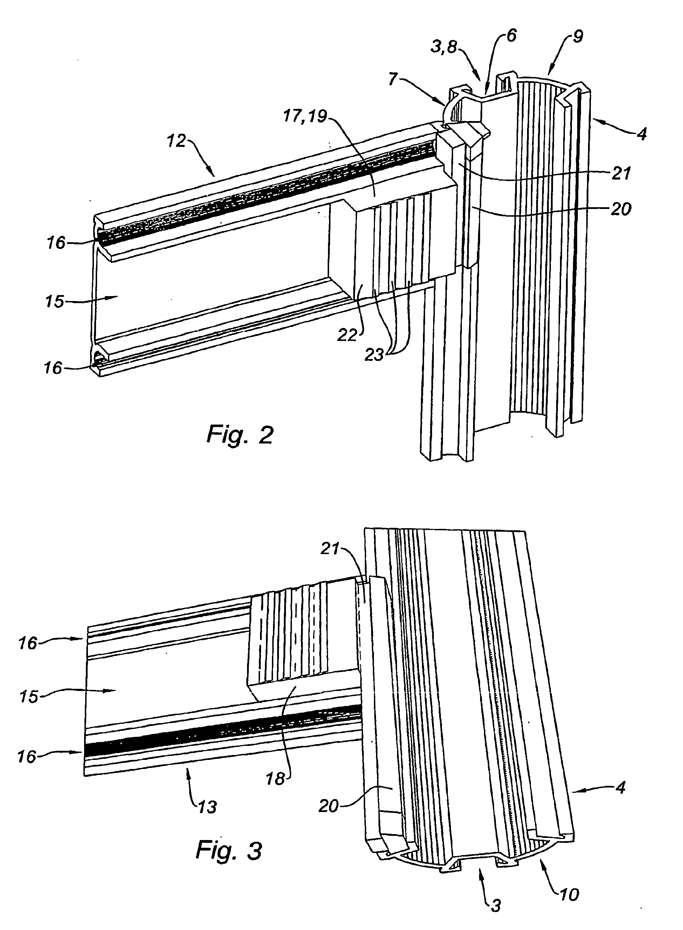

Comme cela est mieux visible aux figures 2 et 3, chaque traverse 12, 13 est tubulaire et comporte un espace central 15 ainsi que deux rainures 16 opposées, disposées de part et d'autres de l'espace central 15. Chaque rainure 16 comporte, de même que précédemment, une zone interne débouchant par une ouverture de largueur plus faible.

Les traverses 12, 13 sont fixées au montant 1 par l'intermédiaire d'éléments de fixation 17, 18.

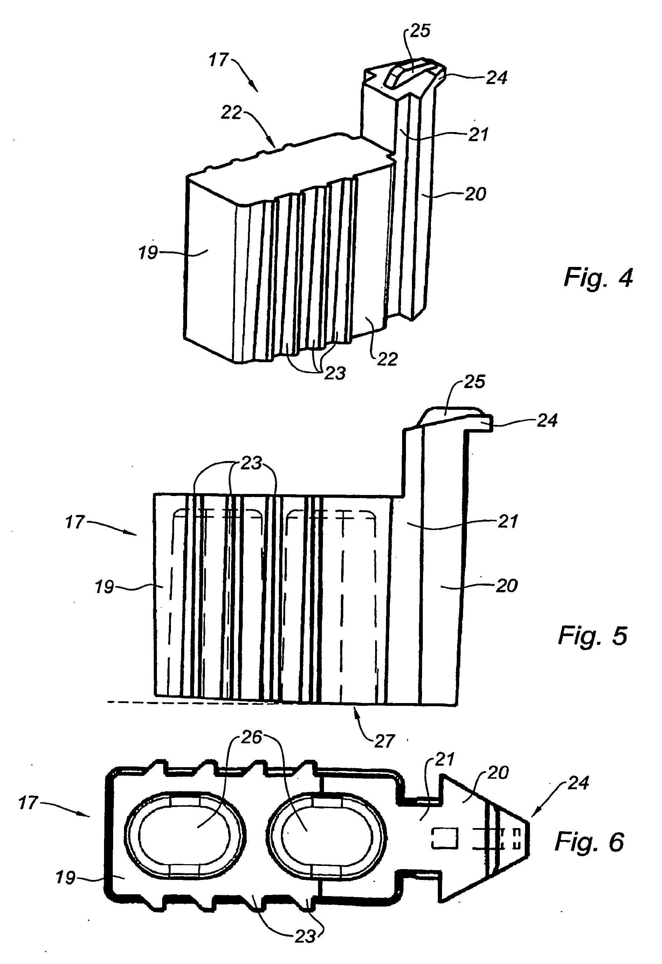

Comme cela est représenté à la figure 2, la traverse supérieure 12 est fixée au montant 1 par l'intermédiaire d'un premier type d'élément de fixation 17, visible plus particulièrement aux figures 4 à 6.

Celui-ci comporte une première partie 19, insérée dans l'espace central 15 de la traverse 12, et une seconde partie 20, insérée dans la rainure 2 du montant 1 et de forme complémentaire à celle-ci.

Les première et seconde parties 19, 20 sont reliées l'une à l'autre par une zone de liaison 21 de plus faible largeur, s'étendant à travers l'ouverture 8 de plus faible largeur de la rainure 2 du montant 1.

La première partie 19 présente une forme générale parallélépipédique et présente deux faces 22 parallèles au plan longitudinal de la traverse 12, sur lesquelles sont ménagées des nervures périphériques 23.

Les nervures 23 s'étendent transversalement à l'axe de la traverse 12 et sont agencées pour maintenir en position l'élément de fixation 17 dans la traverse 12.

La première partie 19 comporte deux trous borgnes 26 s'étendant parallèlement à l'axe du montant 1, débouchant au niveau d'une face inférieure 27 de la première partie 19.

La face inférieure 27 comporte une partie biseautée, formant un angle avec le plan horizontal, permettant de disposer d'un jeu de fonctionnement apte à compenser les défauts de positionnement, et ainsi de régler convenablement l'angle droit entre la traverse et le montant. Cette face biseauté 27 facilite également l'insertion de la première partie dans la traverse 12.

L'élément de fixation 17 est réalisé en matériau synthétique rigide de type polyamide ou polyoxyméthylène (POM), les première et seconde parties 19, 20 venant de moulage en une seule pièce.

La seconde partie 20 s'étend vers le haut, au-delà de la première partie 19 selon l'axe du montant 1, et présente une forme générale conique dans le sens de son insertion dans la rainure 2 du montant 1, de manière à assurer le maintien en position par emmanchement de l'élément de fixation sur le montant

L'extrémité supérieure de la seconde partie 20 comporte une butée 24 venant en appui contre l'extrémité supérieure de la rainure correspondante 2, ladite butée 24 étant équipée d'une nervure de renforcement 25.

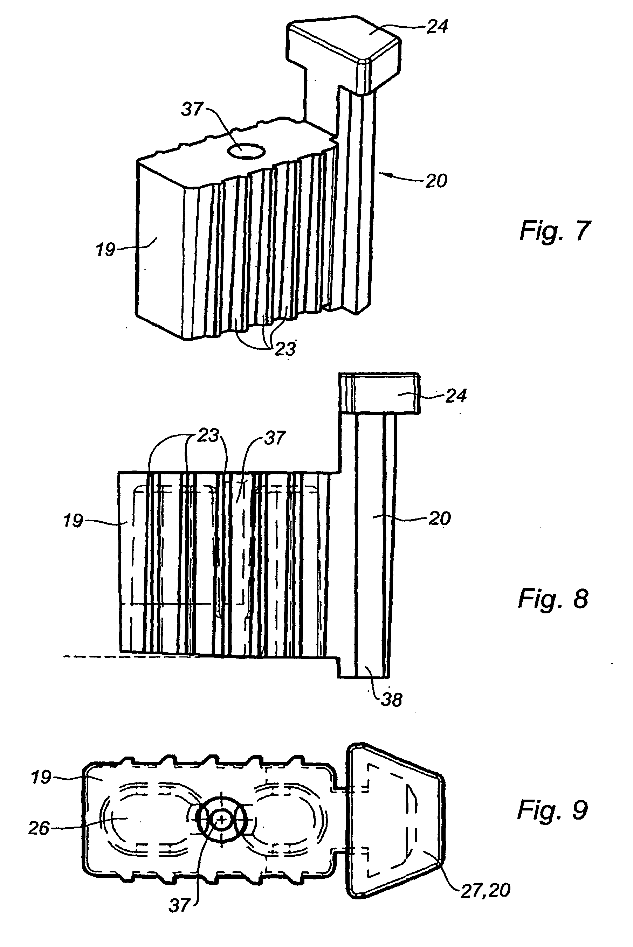

Les figures 7 à 9 représentent une autre forme de réalisation de l'élément de fixation de la traverse supérieure.

Compte tenu des structures proches des deux formes de réalisation, les mêmes éléments seront désignés par les mêmes références.

Cette forme de réalisation diffère en ce que la butée 24 est formée par une tête élargie ne nécessitant plus la présence d'une nervure de renforcement. La seconde partie 20 s'étend de plus vers le bas, au-delà de la première partie 19, de manière à former une butée additionnelle 38, destinée à prendre appui contre l'extrémité correspondante de la traverse 12. Ladite butée additionnelle 38 facilite ainsi le montage et le positionnement de l'élément de liaison 17 dans la traverse 12.

En outre, un trou central 37 est ménagé dans la première partie, ce trou permettant, si nécessaire, d'utiliser une vis de fixation additionnelle permettant de renforcer le maintien en position de la première partie 19 dans la traverse 12.

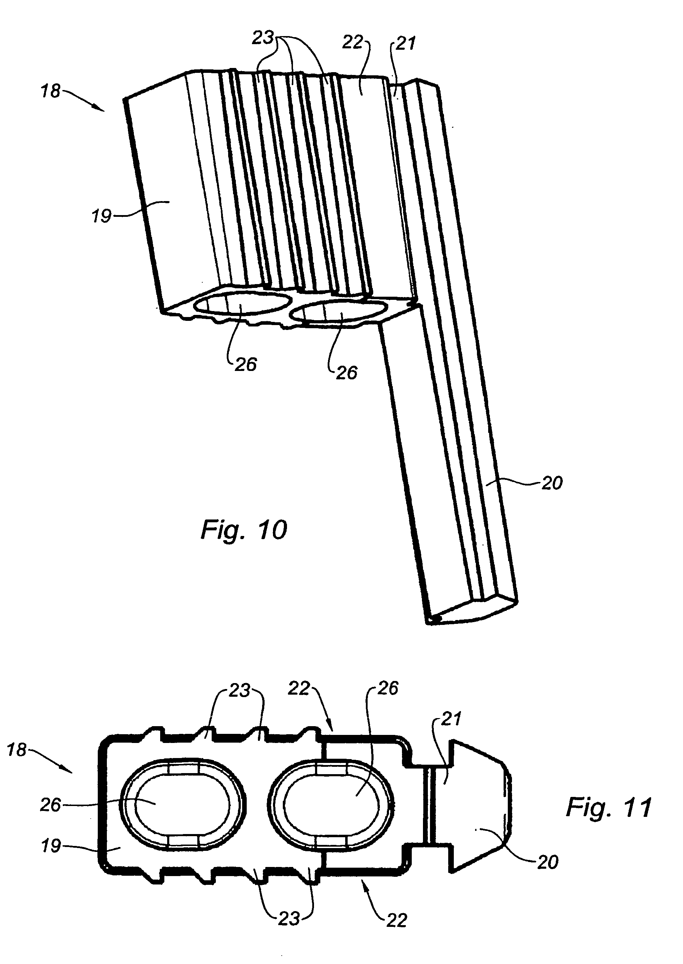

Comme cela est représenté à la figure 3, la traverse inférieure 13 est fixée au montant par l'intermédiaire d'un second type d'élément de fixation 18, visible plus particulièrement aux figures 10 et 11.

Compte tenu des structures proches des éléments de liaison 17, 18 représentés aux figures 4 et 10, les mêmes éléments seront désignés par les mêmes références.

Ce second type d'élément de fixation 18 diffère du premier en ce que la seconde partie 20 s'étend vers le bas au-delà la première partie 19, la longueur de la seconde partie 19 étant dépendante de l'espace à laisser entre la traverse inférieure 13 et le sol (non représenté). Dans cette forme de réalisation, la seconde partie 20 n'est pas équipée d'une butée au niveau de son extrémité inférieure. En outre, la face biseautée est, dans ce cas, la face supérieure de la première partie.

La structure comporte en outre une traverse additionnelle 28 en forme générale de bandeau (figure 1).

Ce bandeau 28 présente une structure différente des traverses standards supérieure et inférieure 12, 13 puisqu'elle ne comporte pas nécessairement d'espace central.

Toutefois, le bandeau 28 comporte, de même que précédemment, deux rainures longitudinales opposées 16, chaque rainure 16 présentant une zone interne, débouchant au niveau de la paroi périphérique par une ouverture de largueur plus faible, de manière à définir des ailes 29 au niveau des bords de ladite ouverture. Ces ailes 29 sont ainsi similaires aux ailes 11 des rainures du montant 1.

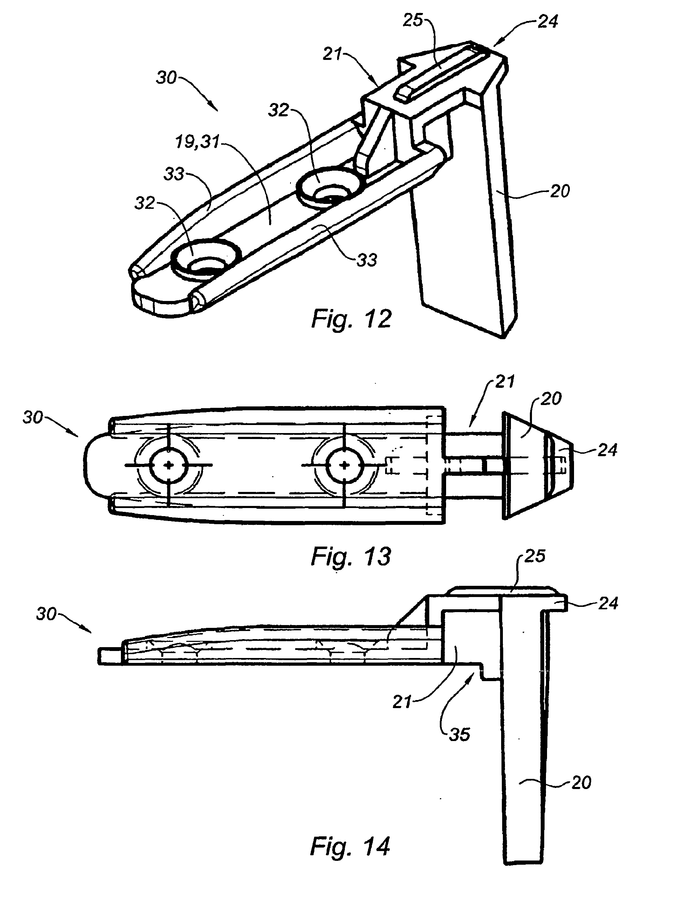

Le bandeau 28 est relié au montant 1 par l'intermédiaire d'un troisième type d'élément de fixation 30, illustré aux figures 12 à 14. De même que précédemment, les références utilisées pour les éléments de fixation des figures 4 et 7 seront reprises.

Celui-ci comporte une première partie 19 comportant une patte 31 s'étendant horizontalement, dans laquelle sont ménagés deux trous 32 permettant le passage de vis (non représentées), fixées dans le fond de la rainure 16 du bandeau 28. La patte 31 est insérée dans la rainure supérieure 16 du bandeau 28, les trous 32 étant ménagés en regard de l'ouverture de la rainure 16. Les vis s'étendent à travers l'ouverture de la rainure 16 et traverse les trous 32, leur extrémité étant vissée dans le fond de la rainure 16. Les bords de la patte 31 comportent chacun une jupe 33 ou bourrelet, s'étendant en direction des ailes 29 de la rainure 16 de la traverse additionnelle 28.

L'élément de fixation précité 30 comporte, de même que précédemment, une seconde partie 20, insérée dans la rainure 4 du montant 1 et présentant une section complémentaire à celle de la zone interne de cette rainure 4, ainsi qu'une forme générale conique permettant son maintien en position par emmanchement dans la rainure 4 du montant 1.

Les première et seconde parties sont reliées l'une à l'autre par une zone de liaison 21 de plus faible largeur, cette zone s'étendant à travers l'ouverture de plus faible largeur 8 de ladite rainure 4. Comme dans le cas de l'élément de fixation représenté à la figure 4, l'extrémité supérieure de la seconde partie 20 comporte une butée 24 venant en appui contre l'extrémité supérieure de la rainure correspondante 4 du montant 1.

Comme cela apparaît à la figure 11, la patte 31 et la seconde partie 20 forment une équerre dont l'angle comporte un décrochement ou une encoche 35 afin de pouvoir réaliser un alignement horizontal entre l'extrémité supérieure du montant et le bord supérieur du bandeau.

Des nervures de renforcement 24, 36 sont disposées au niveau de la butée 24 et dans la zone d'interface entre la zone de liaison 34 et la patte 31.

Selon une autre possibilité de l'invention, dans le cas où le bandeau 28 comporte une structure tubulaire similaire à celle des traverses 12, 13, des éléments de liaison du type de ceux représentés aux figures 4 à 9 peuvent être utilisés.

Comme il va de soi, l'invention ne se limite pas aux seules formes d'exécution de cette structure, décrites ci-dessus à titre d'exemples, mais elle embrasse au contraire toutes les variantes.

## Revendications

1. Structure comportant au moins une traverse tubulaire horizontale (12, 13) fixée à un montant vertical (1) présentant au moins une rainure longitudinale (2, 3, 4, 5), ladite rainure présentant une zone interne (6) de forme déterminée, par exemple en queue d'aronde ou en T, débouchant au niveau de la paroi périphérique du montant (1) par une ouverture (8) de largueur plus faible que ladite zone interne (6), la structure comportant en outre au moins un élément de fixation (17, 18) présentant une première partie (19), insérée dans la traverse (12, 13), et une seconde partie (20), insérée dans la rainure (2, 3, 4, 5), les première et seconde parties étant reliées l'une à l'autre par une zone de liaison (21) de plus faible largeur, s'étendant à travers l'ouverture (8) de plus faible largeur de la rainure (2, 3, 4, 5), **caractérisée en ce que** la première partie (19) comporte des nervures périphériques (23) s'étendant transversalement à l'axe de la traverse (12, 13), agencées pour maintenir en position l'élément de fixation (17, 18) dans la traverse, la seconde partie (20) présentant une section sensiblement complémentaire à celle de la zone interne (6) ainsi qu'une forme générale conique dans le sens de son insertion dans la rainure, de manière à assurer son maintien par emmanchement et serrage dans ladite rainure.

2. Structure selon la revendication 1, **caractérisée en ce que** l'élément de fixation est réalisé en matériau synthétique.

3. Structure selon l'une des revendications 1 et 2, **caractérisée en ce que** la seconde partie (20) s'étend au-delà de la première partie (19), selon l'axe du montant (1) et selon une première direction.

4. Structure selon l'une des revendications 1 à 3, **caractérisé en ce que** la seconde partie (20) s'étend, au-delà de la première partie (19), selon l'axe du montant et selon une seconde direction, de manière à former une butée additionnelle (38), destinée à prendre appui contre l'extrémité correspondante de la traverse (12).

5. Structure selon l'une des revendications 1 à 4, **caractérisée en ce que** la première partie (19, 20) présente au moins une face biseautée lui procurant une forme générale conique.

6. Structure selon l'une des revendications selon l'une des revendications 1 à 5, **caractérisée en ce que** l'une des extrémités de la seconde partie (20) comporte une butée (24) venant en appui contre une extrémité (9) du montant (1).

7. Structure selon la revendication 6, **caractérisée en ce que** la butée (24) est équipée d'au moins une nervure de renforcement (25).

8. Structure selon l'une des revendications 1 à 7, **caractérisée en ce que** la première partie (19) comporte au moins un trou (26), par exemple un trou borgne, orienté selon l'axe du montant (1).

9. Structure selon l'une des revendications 1 à 8, **caractérisée en ce que** la première partie (19) présente une forme générale parallélépipédique.

10. Structure selon l'une des revendications 1 à 9, **caractérisée en ce qu'**elle comporte une traverse additionnelle (28) en forme générale de bandeau, reliée au montant (1) par l'intermédiaire d'un élément de fixation additionnel (30) comportant une première partie (19), insérée et fixée dans une rainure longitudinale (16) de la traverse additionnelle (28) par l'intermédiaire d'au moins une vis, et une seconde partie (20), insérée dans la rainure (4) du montant (1) et présentant une section complémentaire à celle de ladite zone interne (6), les première et seconde parties (19, 20) étant reliées l'une à l'autre par une zone de liaison (21) de plus faible largeur, s'étendant à travers l'ouverture (8) de plus faible largeur de la rainure (4) du montant (1).

## Patentansprüche

1. Struktur, die mindestens eine horizontale rohrförmige Querstrebe (12, 13) aufweist, die an einem vertikalen Pfosten (1) befestigt ist, der mindestens eine Längsrille (2, 3, 4, 5) aufweist, wobei die Rille eine innere Zone (6) mit einer bestimmten Form, beispielsweise einer Schwalbenschwanz- oder T-Form, aufweist, die auf Ebene der Umfangswand des Pfostens (1) mittels einer Öffnung (8) geringerer Breite als die innere Zone (6) mündet, wobei die Struktur ferner mindestens ein Befestigungselement (17, 18) aufweist, das einen ersten Abschnitt (19) aufweist, der in die Querstrebe (12, 13) eingesetzt ist, und einen zweiten Abschnitt (20), der in die Rille (2, 3, 4, 5) eingesetzt ist, wobei der erste und zweite Abschnitt miteinander durch eine Verbindungszone (21) geringerer Breite verbunden sind, die sich durch die Öffnung (8) geringerer Breite der Rille (2, 3, 4, 5) erstreckt, **dadurch gekennzeichnet, dass** der erste Abschnitt (19) periphere Rippen (23) aufweist, die sich quer zur Achse der Querstrebe (12, 13) erstrecken, die ausgebildet sind, um das Befestigungselement (17, 18) in der Querstrebe in Position zu halten, wobei der zweite Abschnitt (20) einen zum Querschnitt der inneren Zone (6) etwa komplementären Querschnitt aufweist sowie eine allgemein konische Form in Richtung seines Einsetzens in die Rille, um seinen Halt durch Einstecken und Befestigung in der Rille sicherzustellen.

2. Struktur nach Anspruch 1, **dadurch gekennzeichnet, dass** das Befestigungselement aus synthetischem Material hergestellt ist.

3. Struktur nach einem der Ansprüche 1 und 2, **dadurch gekennzeichnet, dass** sich der zweite Abschnitt (20) jenseits des ersten Abschnitts (19) gemäß der Achse des Pfostens (1) und gemäß einer ersten Richtung erstreckt.

4. Struktur nach einem der Ansprüche 1 bis 3, **dadurch gekennzeichnet, dass** sich der zweite Abschnitt (20) jenseits des ersten Abschnitts (19) gemäß der Achse des Pfostens und gemäß einer zweiten Richtung erstreckt, um einen zusätzlichen Anschlag (38) zu bilden, der dazu bestimmt ist, sich auf dem entsprechenden Ende der Querstrebe (12) abzustützen.

5. Struktur nach einem der Ansprüche 1 bis 4, **dadurch gekennzeichnet, dass** der erste Abschnitt (19, 20) mindestens eine abgeschrägte Fläche aufweist, die ihm eine allgemein konische Form verleiht.

6. Struktur nach einem der Ansprüche 1 bis 5, **dadurch gekennzeichnet, dass** eines der Enden des zweiten Abschnitts (20) einen Anschlag (24) aufweist, der sich auf einem Ende (9) des Pfostens (1) abstützt.

7. Struktur nach Anspruch 6, **dadurch gekennzeichnet, dass** der Anschlag (24) mit mindestens einer Verstärkungsrippe (25) ausgestattet ist.

8. Struktur nach einem der Ansprüche 1 bis 7, **dadurch gekennzeichnet, dass** der erste Abschnitt (19) mindestens ein Loch (26) aufweist, beispielsweise ein Sackloch, das gemäß der Achse des Pfostens (1) ausgerichtet ist.

9. Struktur nach einem der Ansprüche 1 bis 8, **dadurch gekennzeichnet, dass** der erste Abschnitt (19) eine allgemein parallelepipedische Form aufweist.

10. Struktur nach einem der Ansprüche 1 bis 9, **dadurch gekennzeichnet, dass** sie eine zusätzliche allgemein bandförmige Querstrebe (28) aufweist, die mit dem Pfosten (1) anhand eines zusätzlichen Befestigungselements (30) verbunden ist, das einen ersten Abschnitt (19) aufweist, der in einer Längsrille (16) der zusätzlichen Querstrebe (28) mit Hilfe mindestens einer Schraube eingesetzt und befestigt ist, und einen zweiten Abschnitt (20), der in der Rille (4) des Pfostens (1) eingesetzt ist und einen zum Querschnitt der inneren Zone (6) komplementären Querschnitt aufweist, wobei der erste und zweite Abschnitt (19, 20) miteinander durch eine Verbindungszone (21) geringerer Breite verbunden sind, die sich durch die Öffnung (8) geringerer Breite der Rille (4) des Pfostens (1) erstreckt.

## Claims

1. A structure including at least one horizontal tubular crossbar (12, 13) attached to a vertical upright (1) having at least one longitudinal groove (2, 3, 4, 5), said groove having an internal area (6) with a determined shape, for example as a dovetail or as a T, opening at the peripheral wall of the upright (1) through an aperture (8) with a smaller width than said internal area (6), the structure further including at least one attachment element (17, 18) having a first portion (19), inserted in the crossbar (12, 13), and a second portion inserted in the groove (2, 3, 4, 5), the first and second portions being connected to each other through a connecting area (21) of smaller width, extending through the aperture (8) of smaller width of the groove (2, 3, 4, 5), **characterized in that** the first portion (19) includes peripheral ribs (23) extending transversely to the axis of the crossbar (12, 13), arranged for maintaining the attachment element (17, 18) in position in the crossbar, the second portion (20) having a section substantially mating that of the internal area (6) as well as a general conical shape in the direction of its insertion into the groove, so as to ensure that it is maintained by press-fitting and clamping in said groove.

2. The structure according to claim 1, **characterized in that** the attachment element is made in synthetic material.

3. The structure according to one of claims 1 and 2, **characterized in that** the second portion (20) extends beyond the first portion (19) along the axis of the upright (1) and along a first direction.

4. The structure according to one of claims 1 to 3, **characterized in that** the second portion (20) extends beyond the first portion (19), along the axis of the upright and along a second direction, so as to form an additional abutment (38), intended to bear against the corresponding end of the crossbar (12).

5. The structure according to one of claims 1 to 4, **characterized in that** the first portion (19, 20) has at least one beveled face providing it with a general conical shape.

6. The structure according to one of claims 1 to 5, **characterized in that** one of the ends of the second portion (20) includes an abutment (24) bearing against an end (9) of the upright (1).

7. The structure according to claim 6, **characterized in that** the abutment (24) is equipped with at least one reinforcement rib (25).

8. The structure according to one of claims 1 to 7, **characterized in that** the first portion (19) includes at least one hole (26), for example a blind hole, oriented along the axis of the upright (1).

9. The structure according to one of claims 1 to 8, **characterized in that** the first portion (19) has a general parallelepipedal shape.

10. The structure according to one of claims 1 to 9, **characterized in that** it includes an additional crossbar (28) with a general fillet shape, connected to the upright (1) via an additional attachment element (30) including a first portion (19), inserted and attached in a longitudinal groove (16) of the additional crossbar (28) via at least one screw, and a second portion (20), inserted in the groove (4) of the upright (1) and having a section mating that of said internal area (6), the first and second portions (19, 20) being connected to each other through a connecting area (21) of smaller width, extending through the aperture (8) of smaller width of the groove (4) of the upright (1).
